# EUROPEAN PATENT APPLICATION

(11) **EP 1 298 871 A2**
(43) Date of publication of application: **02.04.2003**
(21) Application number: 02078510.1
(22) Date of filing: 26.08.2002
(51) Int. Cl.: H04L 12/58, G06F 17/60

(54) **Animated electronic message and method of producing the same**

(30) Priority: 06.09.2001 US 947826
(71) Applicant: EASTMAN KODAK COMPANY, Rochester, New York 14650 (US)
(72) Inventor: Paz-Pujalt, Gustavo Roberto, Rochester, New York 14650-2201 (US); Squilla, John R., Rochester, New York 14650-2201 (US); Ashe, Philip Ryan, Rochester, New York 14650-2201 (US); Stephany, Thomas Michael, Rochester, New York 14650-2201 (US); Olson, Donald Edward, Rochester, New York 14650-2201 (US); Pietruszewski, Jacob Ludwig, Rochester, New York 14650-2201 (US); Bolin, Mark R., Rochester, New York 14650-2201 (US); Simon, Richard Alan, Rochester, New York 14650-2201 (US)
(74) Representative: Haile, Helen Cynthia

(57) **Abstract**

A method of producing an animated electronic message in which at least a portion of a fee associated with producing the animated electronic message is paid for by a sponsor. The method comprises the steps of a user accessing a database which includes at least one sponsor message and software for producing the animated electronic message; the user using the software to produce the animated electronic message; the user agreeing to use the sponsor message which will provide a credit for some of the fee for producing the animated electronic message; and attaching the sponsor message and the animated electronic message which is sent to one or more recipients. In a further embodiment, a sponsor coupon is distributed with the sponsor message and the animated message. In a still further embodiment, the sponsor message is animated. In yet a further embodiment, the credit for some of the fee is paid by the sponsor to a service provider or to the user.

## Description

The present invention relates generally to electronic messaging, and more particularly, to a method of sending an animated electronic message.

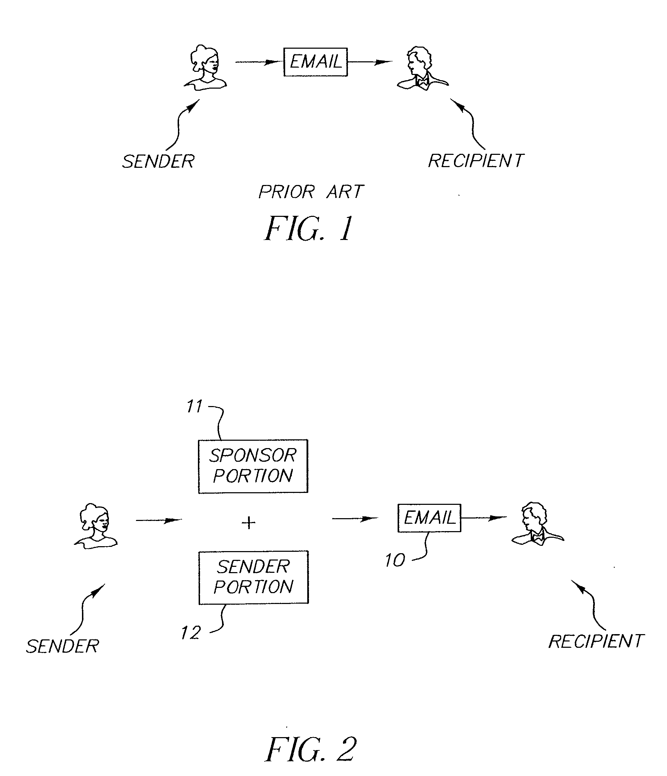

Electronic messaging has become an everyday occurrence for many users of computers. Indeed, sending "emails", as electronic messages are commonly referred to, have become an ordinary, commonplace means of communicating, both in a business environment and in a personal/social environment. As illustrated in Figure 1, a sender may send an email to a recipient.

Emails have now extended to being animated, i.e., animated emails. For example, Lifefx, Inc., a Newton, Massachusetts company has disclosed a product called Facemail which lets a user send email that gets read to the recipient by an animated figure.

While emails and animated emails allow a user to send a message, there is still a cost associated with the sending of the message. For emails, the cost includes software, the connection cost, electricity, as well as the investment of the computer system. For animated emails, the cost includes software, the connection cost, electricity, investment of the computer system, as well as the cost for creating an animation which will be received by the recipient. Such costs may be quite high, whereby a user may not be able to afford producing/distributing an animated electronic message.

Accordingly, a need exists for a system and method for reducing the cost associated with producing and sending of animated emails, such that there is minimal/reduced expenses in producing/sending the animated email.

An object of the present invention is to provide a system and method of reducing a users' expense of producing and sending an animated email.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of producing an animated electronic message in which at least a portion of a fee associated with producing the animated electronic message is paid for by a sponsor. A user accesses a database which includes at least one sponsor message and software for producing the animated electronic message. The user uses the software to produce the animated electronic message, and the user agrees to use the sponsor message which will provide a credit for some of the fee for producing the animated electronic message. The sponsor message and the animated electronic message are attached for distribution to one or more recipients. According to another aspect of the invention, there is provided an electronic message produced by this method which is sent to one or more recipients.

According to a further aspect of the invention, there is provided a method of distributing an electronic message to a recipient. The method comprises the steps of providing an animation model generated from a digital still image; associating a sender message with the animation model to generate an animated message; and electronically distributing a sponsor message and the animated message to the recipient, the sponsor message being associated with a sponsor.

According to a still further aspect of the invention, there is provided an electronic message generated by the steps of providing an animation model generated from a digital still image; associating a sender message with the animation model to generate an animated message; providing a sponsor message, the sponsor message being associated with a sponsor; and electronically distributing the sponsor message and the animated message to a recipient.

According to another aspect of the invention, there is provided a method of distributing an electronic message to a recipient. The method comprises the steps of providing an animation model generated from a digital still image; associating a sender message with the animation model to generate an animated sender message; associating a sponsor message with the animation model to generate an animated sponsor message, the sponsor message being associated with a sponsor; and electronically distributing the animated sponsor message and the animated sender message to the recipient.

The present invention provides a system and method for providing an animation to a recipient, wherein expenses associated with the generation of the animation email would not solely be the burden of the sender of the animation.

The foregoing and other objects, features, and advantages of the invention will be apparent from the following more particular description of the preferred embodiments of the invention, as illustrated in the accompanying drawings.

FIG. 1 shows a schematic of an electronic message being sent from a Sender to a Recipient, as is known in the prior art.

FIG. 2 shows a schematic of an electronic message being distributed from a Sender to a Recipient in accordance with the present invention, the electronic message comprising an animation.

FIG. 3 shows a schematic of an electronic message being distributed from a Sender to a Recipient in accordance with the present invention, the electronic message comprising a sponsor message and an animated message.

FIG. 4 shows a flow diagram of a first embodiment of a method of distributing an electronic message in accordance with the present invention.

FIG. 5 shows a schematic of the flow diagram of FIG. 4.

FIG. 6 shows a schematic of the flow diagram of FIG. 4 wherein the animation model is stored in an animation database.

FIG. 7 shows a schematic illustrating a system in accordance with the present invention.

FIG. 8 shows a schematic illustrating the inclusion of a sponsor coupon in the electronic message distributed to Recipient.

FIG. 9 shows a schematic illustrating a sponsor coupon being electronically distributed to Sender and Recipient.

FIG. 10 shows a flow diagram of a second embodiment of a method of distributing an electronic message in accordance with the present invention.

FIG. 11 shows a schematic of the flow diagram of FIG. 10.

FIG. 12 shows a schematic of a screen illustrating an animated message and a background message.

FIG. 13 shows a schematic illustrating a system wherein meta data is associated with a recipient.

The following is a detailed description of the preferred embodiments of the invention, reference being made to the drawings in which the same reference numerals identify the same elements of structure in each of the several figures.

As indicated above, the present invention provides a system and method of distributing an animated email from a sender to a recipient, wherein in a preferred embodiment, expenses/cost associated with the production, generation, and/or distribution of the animated email are not solely the burden of the sender, but rather, defrayed in some manner by another person/entity. That is, all or a portion of the expenses associated with the production, generation, and/or distribution of the animated email can be provided by a 3^{rd} party, such as a sponsor. In return for providing support for all or a portion of the expenses of the animated email, the sender includes a message from the 3^{rd} party in the animated email. For example, the message may be a sponsor message from the sponsor. Stated alternatively, a portion of a fee associated with producing the animated email is paid for by a sponsor, with the sender/user agreeing to include a sponsor message as part of the animated email. The email can be generated/originated at a publicly available device, such as a kiosk located at a retail location, or in a private environment, such as in a home using a personal computer.

Accordingly, referring to Figure 2, Sender sends an animated email 10 to Recipient. Animated email 10 comprises two portions, a sponsor portion 11 and a sender portion 12 (i.e., a non-sponsor portion; personal portion). Sender portion 12 would comprise a personal, animated message from Sender. Sponsor portion 11 would comprise a sponsor message. Sponsor portion 11 may or may not be animated or comprise an animation.

Sender can be any entity able to initiate an electronic message, for example, an individual, a company, a service provider, and a sponsor. Recipient can be any entity able to receive an electronic message, for example, an individual or a company. Recipient and Sender can be the same, should Sender desire to send himself/herself/itself a message.

Generally, Sender accesses a database which includes software for producing sender portion 12. Upon agreeing to include sponsor portion 11 as part of email 10, Sender uses the software to produce the sender portion 12. Sponsor portion 11 and sender portion 12 are attached for distribution. As will be discussed below, distribution can be accomplished by Sender, the sponsor, or a third party such as a service provider.

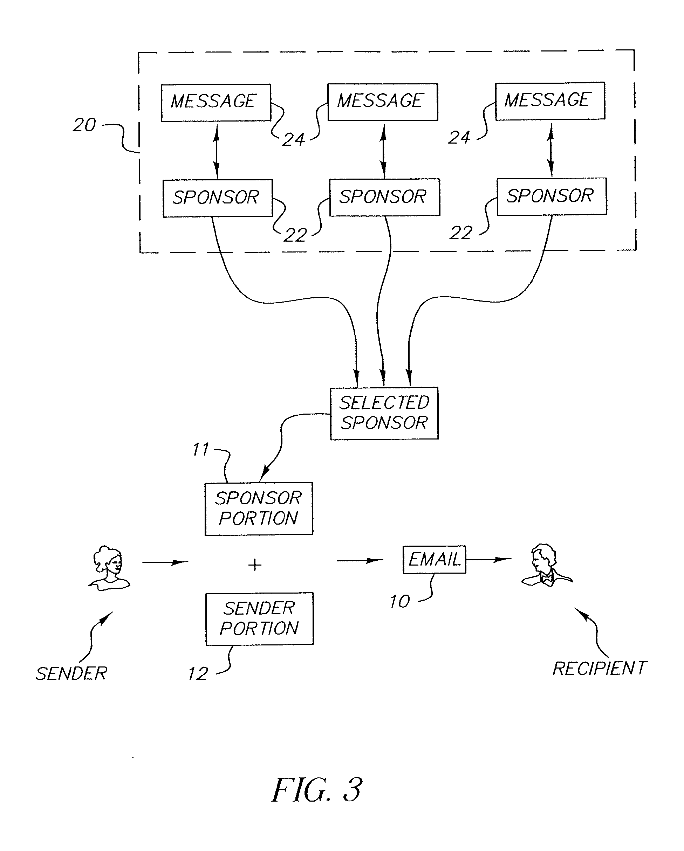

A sponsor for email 10 can be obtained through a variety of methods. For example, as shown in Figure 3, a sponsor database 20 may comprise one or more sponsors 22, wherein each sponsor has an associated sponsor message 24. Alternatively, one or more sponsor databases 20 may be provided, with each sponsor database 20 directed to a specific theme, for example, family, entertainment, art, music, sports, high-technology, and/or business.

Sponsor 22 can be any entity having financial means, backing, or ability to fund/support/sponsor the distribution and/or production of email 10 (or other electronic communication, such as by means of the internet) including an individual, a company such as Eastman Kodak Company, a consumer product such as Kodak's single use camera, a commercial or personal product, a good and/or service, an organization, service provider, a promoter, an advertiser, or website.

Sponsor portion 11 of email 10 would comprise sponsor message 24. Sponsor message 24 may relate to the associated sponsor 22. For example, if the sponsor is a product, the sponsor message may be directed to the product. Similarly, if the sponsor is a company, the sponsor message may be directed to one or more of the company's products/services, a slogan such as Kodak's message "Take Pictures. Further", or an announcement about the company, such as information about an acquisition, stock split, or new corporate officer. Still further, the sponsor message could be a public service announcement paid for by the sponsor. Those skilled in the art will recognize other messages which could comprise a sponsor message. Sponsor message 24 may comprise audio content, visual content, animation, or any combination thereof.

Sponsor 22 is selected. The selection may be made by Sender, or the selection may be automatic without any input from Sender. If a plurality of sponsor databases 20 is provided, Sender might select a desired database theme. For example, Sender may selects a "category" of a product, and the product is randomly selected. Sender may or may not be able to preview the sponsor messages which are available for selection, and once one is selected, Sender may or may not be able to preview the selected sponsor message.

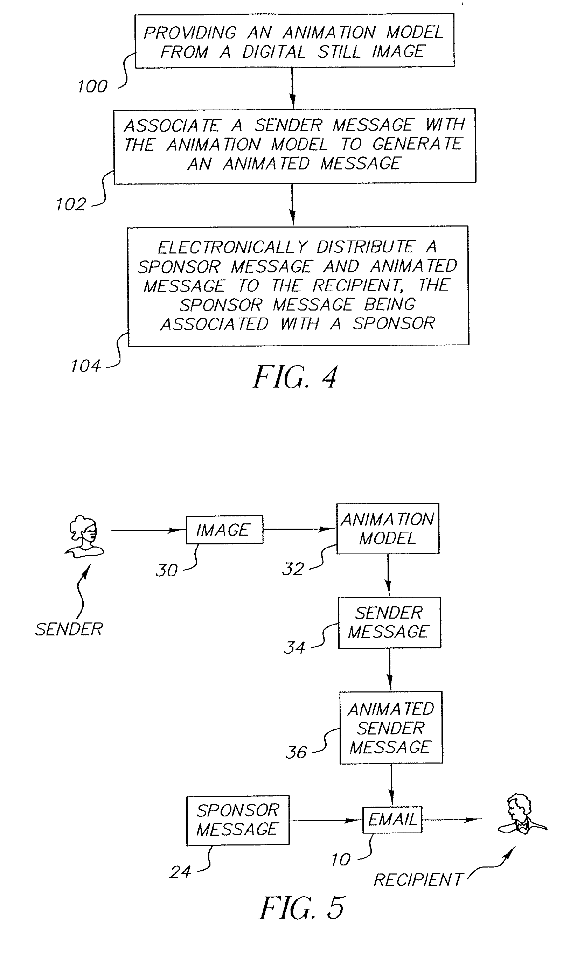

Figure 4 shows a flow chart illustrating a method in accordance with a first embodiment of the present invention for producing an animated electronic message. As illustrated, an animation model is generated from a digital still image at step 100. At step 102, a sender message is associated with the animation model to generate an animated message. The animated message and a sponsor message are then electronically distributed to the recipient (step 104), wherein the sponsor message is associated with a sponsor.

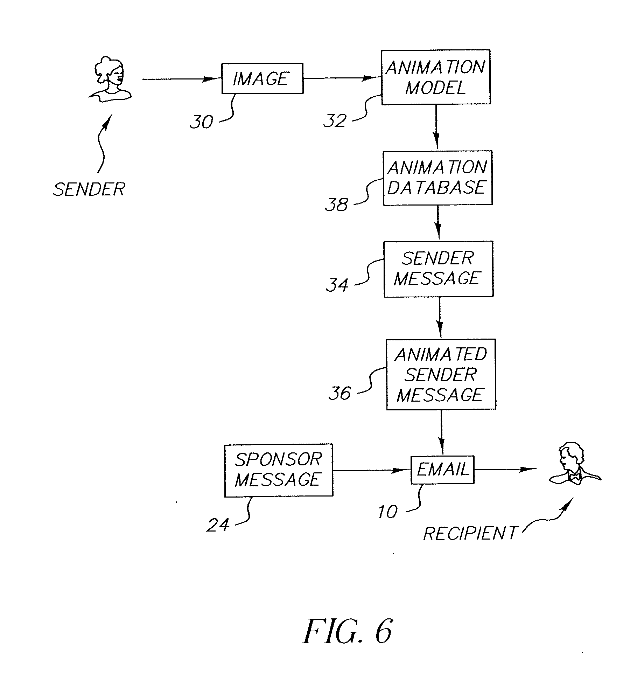

Figure 5 provides a more detailed illustration of the first embodiment. Sender provides a digital still image 30. Digital still image 30 preferably comprises a facial image. An animation model 32 is generated from digital still image 30 using software and methods known to those skilled in the art, for example, as disclosed in "Synthesizing Realistic Facial Expressions from Photographs", by Pighin et al, SIGGRAPH 98, Computer Graphics Proceedings, Annual Conference Series, 1998, Pages 75-83. A further method is available from LifeFX, Inc. which has developed a tool called Facemail for delivering animated email messages (refer to "You've Got Face!", Time, April 2, 2001, page 77). As such, Lifefx utilizes a model of a facial image.

Sender provides a sender message 34. Sender message 34 might comprise an audible phrase, such as "Happy Birthday Mom", or a plurality of sentences, or comprise gestures or other movements. Sender message 34 is associated with animation model 32 to generate an animated message 36. At this point, Sender may desire to preview animated message 36 to verify that it contains sender message 34 and review the quality of the animation, for example to determine whether animated message 36 exhibits an expression of happiness when speaking "Happy Birthday Mom".

It is understood that an audible sender message 34 may be delivered in Sender's voice. Alternatively, an audible sender message 34 might be delivered in a voice of another, for example, a well known celebrity or political figure. As such, the audible portion of animated message 36 may not correspond with the visual image of animated message 36.

Sponsor 22 is selected/identified for email 10, and the associated sponsor message 24 is then determined. As indicated above, sponsor 22 may be selected by Sender from sponsor database 20 or may be automatically selected from sponsor database 20. Once identified, email 10 is electronically distributed to Recipient, with email 10 comprising both sponsor message 24 (i.e., sponsor portion 11) and animated message 36 (i.e., sender portion 12). The electronic distribution may be accomplished by Sender, sponsor 20 or other party such as a service provider, and may be immediately distributed or held for later distribution at a specified time period.

The generation of animation model 32 may require a period of time to generate, particularly if the model to be generated is complex. Accordingly, Sender may prefer to generate and store animation model 32 so that animation model 32 is available for Sender for the sending of email 10 at a later time. Figure 6 provides an illustration of the method in accordance with the present invention wherein animation model 32 is generated and stored in a database for later use. As illustrated, Sender provides digital still image 30 and animation model 32 is generated from digital still image 30 using methods known to those skilled in the art. However, animation model 32 is stored in an animation database 38. Thereafter, when Sender desires to send email 10 to Recipient, Sender accesses animation database 38 to retrieve animation model 32. Sender provides sender message 34 to be associated with animation model 32 to generate animated message 36. Sponsor 22 and the associated sponsor message 24 is identified. Once identified, email 10 is electronically distributed to Recipient, with email 10 comprising both sponsor message 24 and animated message 36.

Animation database 38 may comprise a plurality of pre-defined animation models from which Sender may select one to produce animated message 36. That is, if Sender does not directly provide digital still image 30 from which to generate animation model 32, Sender may produce animated message 36 from a pre-defined animation model stored in animation database 38. Such pre-defined animation models could include well-known television personalities, political figures, historic figures, or cartoon characters.

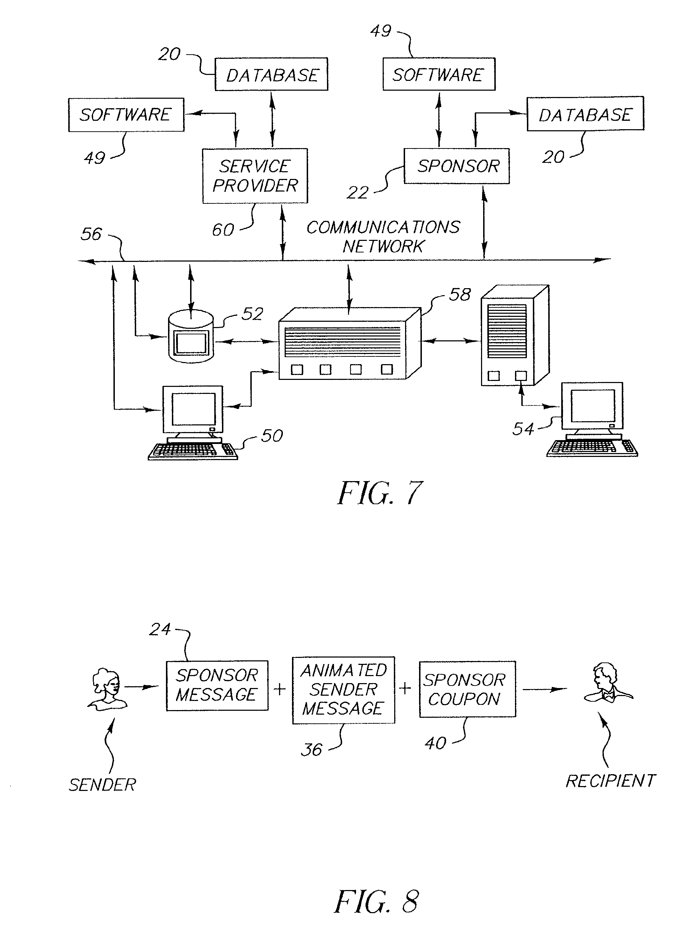

Referring now to Figure 7, software 49 used to generate animation model 32 and animated message 36 can be locally or remotely accessible. Similarly, sponsor database 20 and sponsor 22 can be locally or remotely accessible. If locally accessed, Sender could employ a local device, such as a personal computer 50, a kiosk 52, or a retail computer 54 located at a retail location. If remotely accessible, a network 56 (such as the Internet) would be employed to access software 49 and sponsor database 20. A connection computer 58 might be employed in communicating with network 56 from the local device. Such access may be controlled or monitored by sponsor 22 or by a service provider 60. Service provider 60 might be a retailer, photofinisher, computer operator, communications provider, or other third party who provides a service to sponsor 22 or Sender. For purposes of the present invention, service provider 60 might also be sponsor 22. That is, the service provider and sponsor may be the same entity. Controlling access to software 49 and sponsor database 20 provides a means for obtaining Sender's agreement in including sponsor message 24 as part of email 10. For example, Sender would agree to include sponsor message 24 as part of email 10 in return for accessing and using software 49 for producing animation model 32.

As such, the present invention provides a method of producing an animated electronic message. Sender uses network 56 to access software 49 for producing animated message 36 using sponsor database 20 of service provider 60 which includes at least one sponsor message 24. Sender communicates over network 56 to use software 49 of service provider 60 or sponsor 22 to produce animated message 36. In return for using software 49, Sender agrees to include sponsor message 24 as part of email 10 comprising sponsor message 24 and animated message 36. Email 10 is produced/created, which Sender can direct to be distributed over network 56 to one or more recipients. The actual distribution of email 10 can be accomplished directly by Sender, or Sender can direct sponsor 22 or service provider 60 to distribute email 10.

Sponsor database 20 can reside at or comprise a website. For example, sponsor database 20 may be Eastman Kodak Company's website of www.kodak.com whereby sponsor 22 is identified and selected by accessing the particular website. Alternatively, sponsor database 20 can be a remote service provider who provides a service. In a further alternative, sponsor database 20 could be remotely located and could be generated knowing a user's preference based on a website visitation profile or a search engine usage profile.

With email 10 prepared, distribution of email 10 can be accomplished by Sender, sponsor 22, or service provider 60. For example, service provider 60 can forward email 10 to Sender for distribution. Sender may desire to preview email 10 prior to distribution.

Sponsor message 24 and animated message 36 may be distributed simultaneously to Recipient(s) as separate and distinct portions of email 10. Or alternatively, sponsor message 24 and animated message 36 may be concatenated into a single composite message file which may reduce the size of email 10 when being electronically distributed.

Sponsor message 24 preferably precedes animated message 36 in email 10 thereby requiring Recipient to view sponsor message 24 prior to viewing animated message 36. If sponsor message 24 does not precede animated message 36, once animated message 36 is viewed by Recipient, Recipient might elect not to view sponsor message 24 (i.e., delete/cancel email 10), whereby no benefit is received by sponsor 22.

Sponsor 22 receives a benefit from the distribution of email 10 by having Recipient view sponsor message 24. As such, email 10 acts as a commercial, promotion, or advertisement for sponsor 22. In return, sponsor 22 defrays Sender's cost of generating/distributing email 10. For example, the generation of animation model 32 may be computation intensive and/or require particular software (i.e., software 49), whereby a cost would be associated with the generation.

Sponsor 22 may defray the cost of email 10 by sponsoring the cost of email 10, either directly or by some form of remuneration/reimbursement to Sender or Recipient. For example, as disclosed above, sponsor 22 may defray the cost of email 10 by providing access to software 49 to generate animated message 36. Sponsor 22 may provide a credit for some of the fee. For example, sponsor 22 may provide a predetermined monetary value to Sender for each email 10 sent by Sender, for example, one penny, or sponsor 22 may provide a credit toward a free animation model. Such arrangements could be viewed as a loyalty program for email.

Sender would receive a credit from sponsor 22 each time Sender sends email 10 comprising sponsor message 24 from sponsor 22. Credits could accumulate over time and accumulated credits could be used toward future emails or to produce future animation models. For example, the first animation model is provided free of charge, but credits must be accumulated for further animation model generations. Alternatively, accumulated credits could be used toward other products, goods, or services, for example, sponsor tee-shirts, sports tickets, photo processing, and magazines.

Alternatively, receipt of a credit by Sender may depend on whether Recipient opens/reads email 10. That is, Sender might only receive a credit if Recipient actually opens/reads email 10.

In a further alternative, the cost could be paid upfront by Sender, with Sender receiving a credit from sponsor 22 each time Sender sends email 10 comprising sponsor message 24 from sponsor 22. Credits could accumulate over time, wherein Sender could cash-out. Or accumulated credits could be used to generate further animation models. At a predetermined level of accumulated credit, Sender may be provided with a "coupon" for a free animation model generation.

In still a further alternative, Sender would receive a credit from sponsor 22 only upon Recipient viewing sponsor message 24 contained within email 10. That is, Sender may send email 10 that is not open/read by Recipient. In such an instance, there would be no benefit to sponsor 22 and sponsor 22 would not provide a credit to Sender. As such, Sender would only receive credit only upon review of sponsor message 24 by Recipient.

Other methods may be employed to control the production of animated message 36 to help defray/reduce the expenses associated with the production/distribution of animated message 36, and such methods may be known to those skilled in the art.

Recipient might also receive and accumulate credits for each viewing/reading of sponsor message 24 in a manner similar as described above with respect to Sender. That is, each time Recipient reads/views sponsor message 24, Recipient could receive for example, money, credit, and/or coupons. As with credits accumulated by Sender, the credits might be accumulated for used for the generation of animation models. Recipient might also receive a "coupon" for a free animation model generation to encourage Recipient to be a sender of animated emails. Alternatively, Recipient might receive a "coupon" for a free animation model generation after viewing/reading a predetermined number of sponsor messages 24.

Recipient might also receive and accumulate credits for each viewing of a website sponsored by sponsor 22 after viewing/reading sponsor message 24. Directions to a website (for viewing by Recipient) could be accomplished by providing a link to the particular website in sponsor message 24.

A website might include a message, advertisement, and/or banner which indicates that a viewer can receive a credit/coupon toward an animated electronic message by viewing the website. Accordingly, when viewer views the website in response to the message/advertisement/banner, the viewer would receive the credit/coupon.

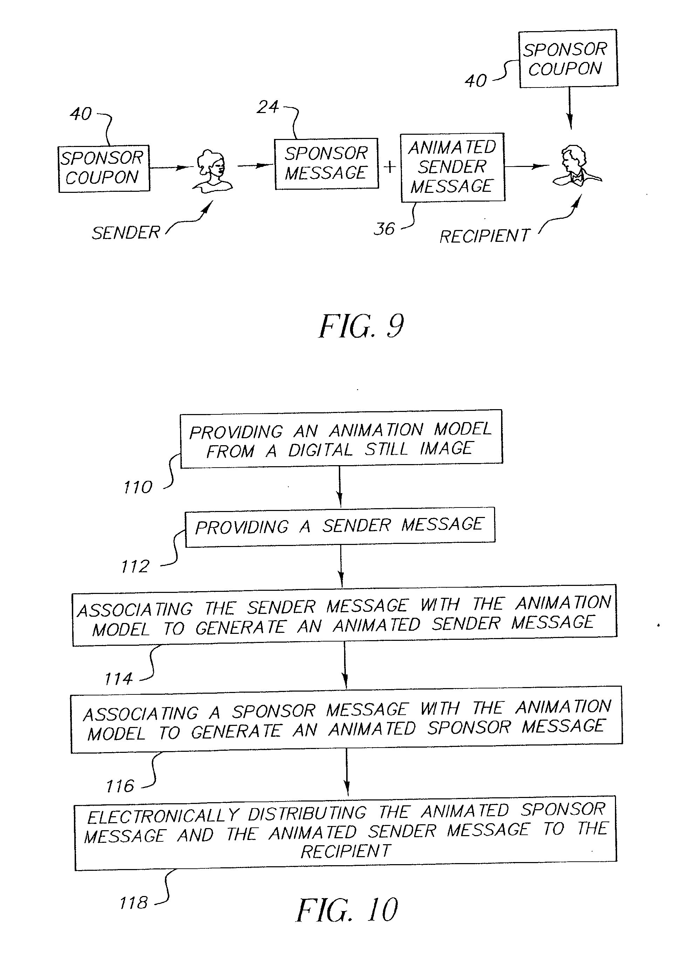

Referring now to Figures 8 and 9, sponsor 22 might encourage Recipient to purchase or try a product/good/service available from/by sponsor 22 or service provider 60 by providing Recipient with a sponsor coupon 40. That is, sponsor 22 may desire to send sponsor coupon 40 to Recipient. Sponsor coupon 40 might be distributed electronically to Recipient along with sponsor message 24 and animated message 36, as illustrated in Figure 8. Alternatively, sponsor coupon 40 might be distributed electronically to Recipient at a later time, as illustrated in Figure 9. In a further arrangement, sponsor coupon 40 is distributed to Recipient after determining whether Recipient has purchased a sponsor product after receiving sponsor message 24. Sponsor 22 may also desire to electronically distribute sponsor coupon 40 to Sender, as illustrated in Figure 9.

To more particularly capture the attention of Recipient when viewing the sponsor message 24 and enhance sponsor message 24, sponsor message 24 may itself be comprised of an animated sponsor message. The animated sponsor message might comprise an animation of a celebrity or well known political figure. For example, if the sponsor's product related to golf clubs, an animated sponsor message might be delivered by a well-known celebrity golfer.

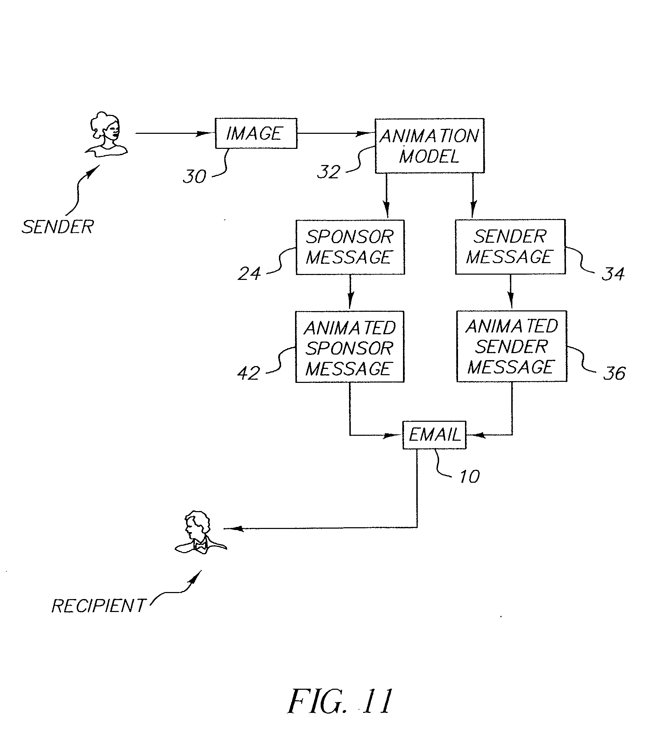

Alternatively, to personalize such an animated sponsor message, the animated sponsor message may be generated using the digital still image provided by Sender. As such, each sponsor message 24 would be personalized since it would be generated using different animation models. Figures 10 and 11 illustrate a method wherein email 10 comprises an animated sponsor message 42 generated using the same animation model employed to generate animated message 36. At step 110, animation model 32 is generated from digital still image 30. Sender message 34 is provided (step 112) and associated with animation model 32 to generate animated message 36 (step 114). Sponsor message 24 is then associated with animation model 32 to generate animated sponsor message 42 (step 116). At step 118, animated sponsor message 42 and animated message 36 are electronically distributed to Recipient in email 10. As disclosed above, animation model 32 may be generated and stored in animation database 38.

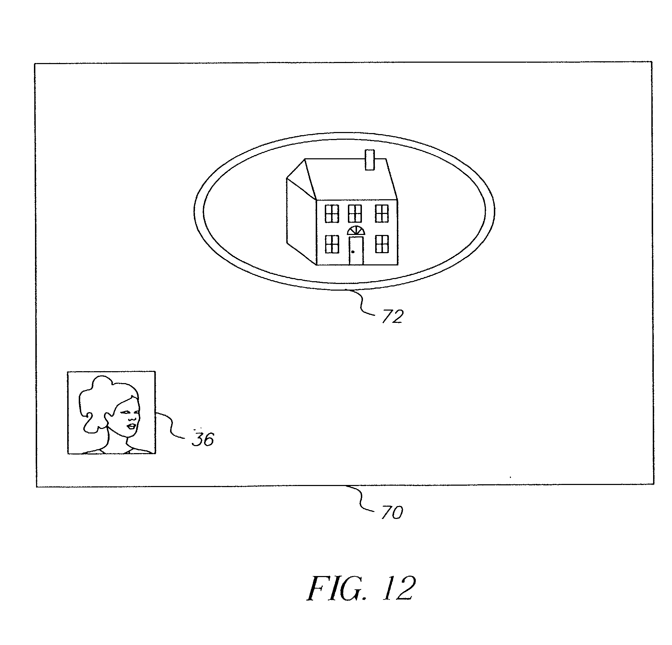

To enhance animated message 36, Recipient might view a background image (i.e., a secondary image) simultaneously with animated message 36. That is sender portion 12 of email 10 would comprise animated message 36 and a background image. For example, as illustrated in Figure 12, animated message 36 is viewed on a screen 70 with a background image 72 disposed adjacent. As illustrated, background image 72 shows a home which Sender may be describing in animated message 36. The background image may or may not be animated, may or may not include textual information, and could comprise a single image or plurality of images such as arranged in a slide show. The background image could complement animated message 36. For example, if animated message 36 includes birthday greetings, the background image could comprise text of "happy birthday" or an image of a birthday cake. Alternatively, the background image could show sponsor's product. For further, the background image could complement sponsor message 24. For example, if sponsor message 24 is referring to a motor boat, the background image could comprise a notification of a sale at a boating store local to Recipient.

In particular instances, Sender may desire to distribute animated message 36, but desire not to participate with sponsor message 24. That is, Sender would be willing to fully pay the cost of the animated electronic message, including the cost of generating the animation model. In such instances, an "opt-out" feature may be provided in software 49. For example, a "opt-out" button could be incorporated in software 49 when producing animated message 36, such as in an animation viewer and/or animation viewing software. If Sender selects the "opt-out" feature, no coupons/money/credit would be received, and no sponsor message 24 is sent. Since no sponsor message 24 was sent, sponsor 22 may desire to configure the method such that Recipient does not acquire credits/money/coupon toward viewing of sponsor message 24. If software 49 is accessed by means of the arrangement illustrated in Figure 7, sponsor 22 and service provider 60 may require a fee from Sender if the "opt-out" feature is selected.

In particular instances, Recipient may desire to not view/read sponsor message 24 of email 10. That is, Recipient would be willing to pay toward the cost of animated message 36 in order to not review/read sponsor message 24. In such instances, email 10 may include an "opt-out" feature for Recipient to select. Accordingly, sponsor message 24 would not be displayed; only animated message 36 would be displayed. Recipient might not be eligible for coupons/money/coupon and could be assessed a fee from sponsor 22. Sender might also may not be eligible for coupons/money/credit if Recipient opts-out from viewing/reading sponsor message 24.

In another instance, Recipient may desire to receive emails from Sender. For example, a parent may want to receive emails from his son located at a college remote from the parent. To encourage emails from Sender, Recipient may agree to pay any or all fees associated with producing/distributing the animated electronic message. As such, Recipient may agree to pay a fee to sponsor 22 or service provider 60 for each email 10 sent by Sender to Recipient so that there is no cost to Recipient for producing/distributing email 10 to Recipient. Such an arrangement might be similar to a "collect phone call" wherein the receiver of the phone message pays all charges. This fee may or may not be in addition to requiring Recipient to read/open sponsor message 24 with email 10.

It is understood that service provider 60 may provide an animation service to sponsor 22 for a fee. For example, service provider may provide access to software 49 for Sender to produce/distribute animated message 36. In return for access to software 49, Sender agrees to include sponsor message 24 in email 10. In return for supplying software 49, creating the animation models, and/or coordinating the distribution of sponsor messages 24, sponsor 22 agrees to provide a benefit to service provider 60 for the inclusion of sponsor message 24 in email 10. The benefit to service provider 60 could be a fee such as a payment of money or a credit. Accordingly, in this arrangement, sponsor 22 provides a fee/credit to service provider 60, and Sender may or may not receive a fee/credit from sponsor 22.

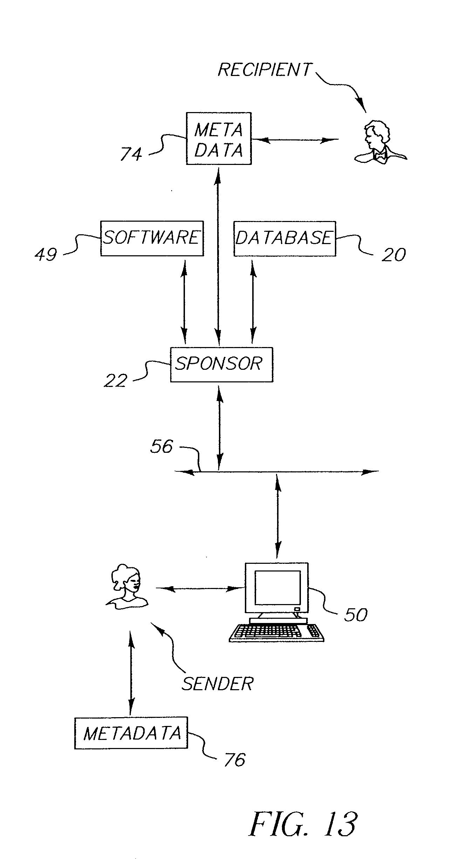

Referring to Figure 13, metadata 74 may be associated with Recipient's email address, with the metadata identifying categories of sponsor messages in areas of interest to Recipient. For example, sports, gardening, dance, or cooking. Accordingly, when email 10 is produced in accordance with the present invention for distribution to Recipient, sponsor message 24 is selected from one of the categories of sponsor messages identified by Recipient. Consequently, sponsor message 24 which is in email 10 would relate to Recipient's metadata 74. The collection of metadata 74 for Recipient can be accomplished through a web service. Once activated, each time email 10 is sent to Recipient, sponsor message 24 would be of a category of interest to Recipient.

Metadata 76 may also be associated with Sender, such as with Sender's email address. Accordingly, when email 10 is produced in accordance with the present invention for distribution to Recipient, sponsor message 24 is selected from one of the categories of sponsor messages identified by Sender. Consequently, sponsor message 24 which is in email 10 would relate to Sender's metadata 76. Associating sponsor message 24 with Sender's metadata 76 may be desired, for example, if metadata is not available for Recipient or if Sender is distributing an email to a wide audience whose interests are not known. Use of metadata 76 might ensure that sponsor message 24 included with email 10 is from a category of sponsor messages which is of interest to Sender.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice the method according to the present invention.

In addition, email 10 can be placed on a computer storage medium, such as a compact disc, for non-electronic distribution to Recipient. Such distribution might be, for example by personal delivery or the U.S. Postal Service. This method of distribution of email 10 may be desired if, for example, the size of email 10 does not promote distribution via a network or if Recipient is not able to access the network to receive email 10.

## Claims

1. A method of producing an animated electronic message in which at least a portion of a fee associated with producing the animated electronic message is paid for by a sponsor, comprising the steps of:
a user accessing a database which includes at least one sponsor message and software for producing the animated electronic message;
the user using the software to produce the animated electronic message;
the user agreeing to use the sponsor message which will provide a credit for some of the fee for producing the animated electronic message; and
attaching the sponsor message and the animated electronic message which is sent to one or more recipients.

2. The method of Claim 1, wherein the sponsor message and animated electronic message are concatenated to produce a composite message.

3. The method of Claim 1, wherein the user or recipient or both receives credit from a service provider or a sponsor.

4. The method of Claim 1, further comprising the step of attaching a sponsor coupon provided by sponsor with the sponsor message and animated electronic message.

5. The method of Claim 1, further comprising the step of selecting the sponsor message from a sponsor message database using metadata associated with the one or more recipients.

6. A composite message produced by the method of Claim 1 which is sent to one or more recipients.

7. A composite message for distribution over a network such as the Internet, the composite message comprising
a sponsor message provided by a sponsor; and
an animated message constructed in accordance with software accessed using the network with a user agreeing to include the sponsor message as part of the composite message, the sponsor message and animated message being concatenated to produce the composite message thereby assuring that the composite message will be sent to at least one recipient to provide a benefit to the sponsor.

8. A method of distributing an electronic message to a recipient, comprising the steps of:
providing an animation model generated from a digital still image;
associating a sender message with the animation model to generate an animated message; and
attaching a sponsor message and the animated message to produce the electronic message which is distributed to the recipient, the sponsor message being associated with a sponsor.

9. A method of distributing an electronic message to a recipient, comprising the steps of:
providing an animation model generated from a digital still image;
associating a sender message with the animation model to generate an animated sender message;
associating a sponsor message with the animation model to generate an animated sponsor message, the sponsor message being associated with a sponsor; and
electronically distributing the animated sponsor message and the animated sender message to the recipient.

10. A composite electronic message for distribution over a network, comprising:
an animated sender message produced from a first animation model and comprising a sender message; and
an animated sponsor message produced from a second animation model and comprising a sponsor message provided by a sponsor, the animated sender message and animated sponsor message being concatenated to form the composite electronic message which is distributed over the network to at least one recipient.
